# EUROPEAN PATENT SPECIFICATION

(11) **EP 3 638 965 B1**
(45) Date of publication and mention of the grant of the patent: **21.08.2024**
(21) Application number: 18739680.9
(22) Date of filing: 18.06.2018
(51) Int. Cl.: F25B 21/00

(54) **ELECTROCALORIC MODULE WITH EMBEDDED ELECTRONICS, METHOD OF MAKING THE ELECTROCALORIC MODULE AND METHOD OF TRANSFERRING HEAT BY USING THE ELECTROCALORIC MODULE**
ELEKTROKALORISCHES MODUL MIT EINGEBUNDENER ELEKTRONIK, VERFAHREN ZUR HERSTELLUNG DES ELEKTROKALORISCHEN MODULS UND VERFAHREN ZUR WÄRMEÜBERTRAGUNG UNTER VERWENDUNG DES ELEKTROKALORISCHEN MODULS
MODULE ÉLECTROCALORIQUE AVEC ÉLECTRONIQUE INTÉGRÉE, MÉTHODE DE FABRICATION DU MODULE ÉLECTROCALORIQUE ET MÉTHODE DE TRANSFERT DE CHALEUR PAR L'UTILISATION DU MODULE ÉLECTROCALORIQUE

(30) Priority: 16.06.2017 US 201762521171 P
(43) Date of publication of application: 22.04.2020
(73) Proprietor: Carrier Corporation, Palm Beach Gardens, FL 33418 (US)
(72) Inventor: MANTESE, Joseph V., East Hartford, Connecticut 06108 (US); ANNAPRAGADA, Subramanyaravi, East Hartford, Connecticut 06108 (US); CULP, Slade R., East Hartford, Connecticut 06108 (US); DARDONA, Sameh, East Hartford, Connecticut 06108 (US); EASTMAN, Scott Alan, East Hartford, Connecticut 06108 (US); SCHMIDT, Wayde R., East Hartford, Connecticut 06108 (US); VERMA, Parmesh, East Hartford, Connecticut 06108 (US); WALKER, Craig R., East Hartford, Connecticut 06108 (US); XIE, Wei, East Hartford, Connecticut 06108 (US)
(74) Representative: Dehns
(86) International application number: PCT/US2018/038044
(87) International publication number: WO 2018/232390

(56) References cited:
- WO-A1-2015/156794
- US-A1- 2011 146 308
- US-A1- 2011 309 463

## Description

The invention relates to the technical field of electrocaloric modules, to methods of making an electrocaloric module and to methods of transferring heat using an electrocaloric module.

### BACKGROUND

A wide variety of technologies exist for cooling applications, including but not limited to evaporative cooling, convective cooling, or solid state cooling such as electrothermic cooling. One of the most prevalent technologies in use for residential and commercial refrigeration and air conditioning is the vapor compression refrigerant heat transfer loop. These loops typically circulate a refrigerant having appropriate thermodynamic properties through a loop that comprises a compressor, a heat rejection heat exchanger (i.e., heat exchanger condenser), an expansion device and a heat absorption heat exchanger (i.e., heat exchanger evaporator). Vapor compression refrigerant loops effectively provide cooling and refrigeration in a variety of settings, and in some situations can be run in reverse as a heat pump. However, many of the refrigerants can present environmental hazards such as ozone depleting potential (ODP) or global warming potential (GWP), or can be toxic or flammable. Additionally, vapor compression refrigerant loops can be impractical or disadvantageous in environments lacking a ready source of power sufficient to drive the mechanical compressor in the refrigerant loop. For example, in an electric vehicle, the power demand of an air conditioning compressor can result in a significantly shortened vehicle battery life or driving range. Similarly, the weight and power requirements of the compressor can be problematic in various portable cooling applications.

Accordingly, there has been interest in developing cooling technologies as alternatives to vapor compression refrigerant loops. Various technologies have been proposed such as field-active heat or electric current-responsive heat transfer systems relying on materials such as electrocaloric materials, magnetocaloric materials, or thermoelectric materials. However, many proposals have been configured as bench-scale demonstrations with limited capabilities. WO 2015/156794 discloses a heat pump element comprising a fluid-filled system containing a porous thin-film element made of field-sensitive material, heat transfer fluid channels, two or more heat exchangers, and one or more actuators to control the fluid flow through the heat transfer fluid channels based on signals from one or more pressure, temperature or velocity sensors. WO 2015/156794 A1 discloses an electrocaloric module according to the preamble of claim 1, a method of making an electrocaloric module according to the preamble of claim 4 and a method of transferring heat according to the preamble of claim 7.

US 2011/146308 and US 2011/309463 disclose cooling systems comprising an electrocaloric membrane which alternates between thermal contact with a heat sink and a heat source and is connected to a voltage supply for polarizing and depolarizing the electrocaloric membrane to promote heat transfer from the heat source to the heat sink.

### BRIEF DESCRIPTION

According to the invention an electrocaloric module comprises a housing and an electrocaloric element in the housing. The electrocaloric element comprises an electrocaloric film, a first electrode on a first surface of the electrocaloric film, and a second electrode on a second surface of the electrocaloric film. The electrocaloric module also includes a first thermal connection configured to connect to a first thermal flow path between the electrocaloric element and a heat sink, a second thermal connection configured to connect to a second thermal flow path between the electrocaloric element and a heat source, and a power connection connected to the first and second electrodes and configured to connect to a power source, characterized by an embedded electronic component configured to perform an ancillary or secondary function associated with generation or transfer of heat energy so as to not be directly involved in the generation or transmission of heat energy, wherein the embedded electronic component is selected from a resistor, a diode, a Zener diode, an inductor, a capacitor, a piezoelectric element, a current sensor, a fusible link, or interdigitated electrodes.

In some embodiments, a heat transfer system comprises the above-described electrocaloric module, a first thermal flow path between the electrocaloric elements and a heat sink through the first thermal connection, a second thermal flow path between the electrocaloric elements and a heat source through the second thermal connection, an electrical connection between a power source and the electrodes further through the power connection, and a controller configured to selectively apply voltage to activate the electrodes in coordination with heat transfer along the first and second thermal flow paths to transfer heat from the heat source to the heat sink.

In some embodiments, the heat transfer system controller may be configured to direct power to or receive a signal from the embedded electronic component.

According to the invention a method of making an electrocaloric module comprises fabricating an electrocaloric element comprising an electrocaloric film, a first electrode on a first surface of the electrocaloric film, and a second electrode on a second surface of the electrocaloric film, and disposing the electrocaloric element in a housing. Further according to the method, a first thermal connection is provided configured to connect to a first thermal flow path between the electrocaloric element and a heat sink, a second thermal connection is provided configured to connect to a second thermal flow path between the electrocaloric element and a heat source, and a power connection is provided connected to the electrodes and configured to connect to a power source to form an electrocaloric module. The method further includes embedding an electronic component configured to perform an ancillary or secondary function associated with generation or transfer of heat energy so as to not be directly involved in the generation or transmission of heat energy in the electrocaloric module wherein the embedded electronic component is selected from a resistor, a diode, a Zener diode, an inductor, a capacitor, a piezoelectric element, a current sensor, a fusible link, or interdigitated electrodes.

According to the invention a method of making a heat transfer system, comprising making an electrocaloric module according to the above-described method, connecting the first thermal connection to a heat sink, connecting the second thermal connection to a heat source, connecting the electrical connection to a power source, and connecting a controller to the electrodes and the thermal connections, said controller configured to selectively apply voltage to activate the electrodes in coordination with heat transfer along the first and second thermal flow paths to transfer heat from the heat source to the heat sink.

The electrocaloric module can comprise a plurality of electrocaloric elements that individually comprise an electrocaloric film, a first electrode on a first surface of the electrocaloric film, and a second electrode on a second surface of the electrocaloric film.

In some embodiments, a method of transferring heat comprises selectively applying voltage to activate electrodes on first and second surfaces of an electrocaloric material disposed in an electrocaloric module. Further according to the method, heat is transferred, in coordination with application of voltage to the electrodes, from a heat source to the electrocaloric material and from the electrocaloric material to a heat sink. The method also includes supplying electric power to, or receiving a signal from, or supplying electric power to and receiving a signal from an embedded electronic component embedded in the electrocaloric module wherein the embedded electronic component is configured to perform an ancillary or secondary function associated with generation or transfer of heat energy so as to not be directly involved in the generation or transmission of heat energy, characterized in that the embedded electronic component is selected from a resistor, a diode, a Zener diode, an inductor, a capacitor, a piezoelectric element, a current sensor, a fusible link, or interdigitated electrodes.

The embedded electronic component can comprise a passive electronic component.

The embedded electronic component can comprise a positive temperature coefficient of resistance element or a fusible link in the connection between the electrical power source and the electrodes.

The embedded electronic component can comprise a resistance temperature detector, a piezoelectric element, a sensor to measure electric dissipation, a sensor to measure current through the circuit and the circuit's quiescent electrical discharge, a noise sensor, an acoustic sensor, a voltage sensor, or an electrical arc sensor.

The embedded electronic component can comprise interdigitated electrodes.

The embedded electronic component can be integrated with or affixed to the electrocaloric element.

The embedded electronic component can be separate from electrocaloric elements.

### BRIEF DESCRIPTION OF THE DRAWINGS

Subject matter of this invention is pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of a top view of an example embodiment of an electrocaloric heat transfer module;
FIG. 2 is a schematic depiction of a cross-sectional side view of the module of FIG. 1;
FIG. 3 is a schematic depiction of an example embodiment of an electrocaloric heat transfer system;
FIG. 4 is a schematic depiction of an electrocaloric element from the view of FIG. 2, including an embedded electronic component;
FIG. 5A is a schematic depiction of a top view of an embedded electronic component comprising interdigitated electrode, FIG. 5B represents a schematic depiction of cross-section side view of interdigitated electrodes on opposite sides of an electrocaloric film, and FIG. 5C represents a schematic depiction of cross-section side view of interdigitated electrodes on the same side of an electrocaloric film; and
FIGS. 6A, 6B, and 6C each represents a schematic depiction of an embedded electronic component comprising electrodes on surfaces of an electrocaloric material.

### DETAILED DESCRIPTION

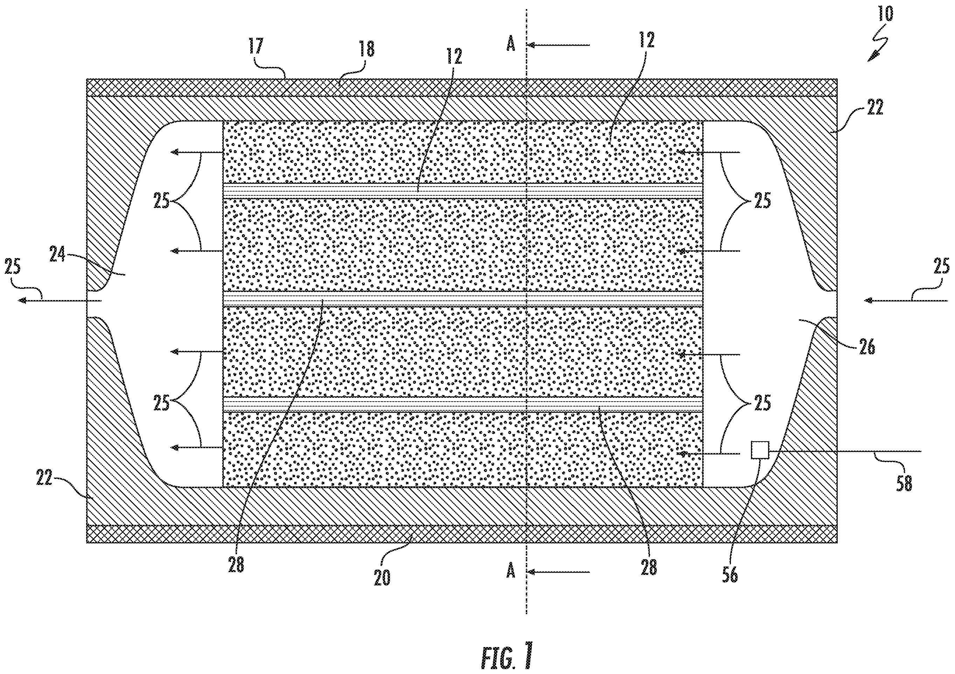

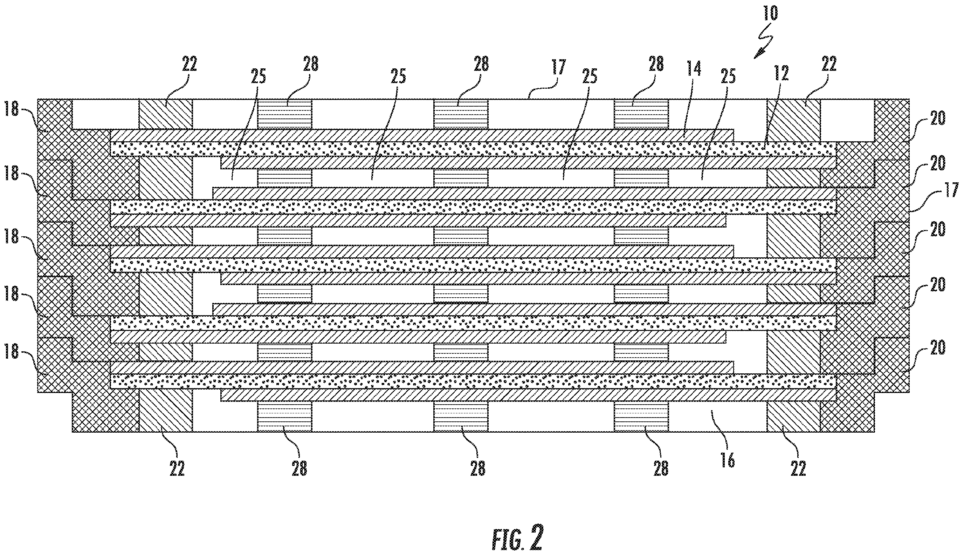

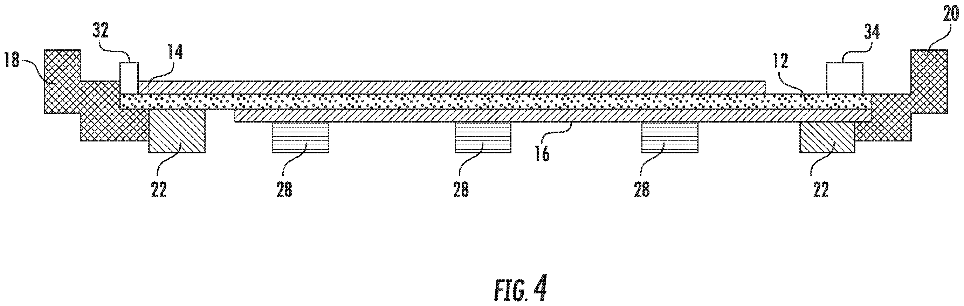

As mentioned above, a heat transfer system is disclosed that includes an electrocaloric module. An example of an embodiment of a module is schematically depicted in FIGS 1 and 2. Although any directions described herein (e.g., "up", "down", "top", "bottom", "left", "right", "over", "under", etc.) are considered to be arbitrary and to not have any absolute meaning but only a meaning relative to other directions, FIG. 1 can be described as a "bottom" view of an example embodiment of a module and FIG. 2 can be described as a "side" cross-section view taken along the line A↔A shown in FIG. 1. As shown in FIGS. 1 and 2, an electrocaloric module 10 comprises an electrocaloric element that comprises an electrocaloric film 12, a first electrode 14 on a first side of the film and a second electrode 16 on a second side of the film, disposed in a housing 17. It is noted that, for ease of illustration so that details of the electrocaloric film 12 and other components are not obscured, the electrodes 14, 16 are omitted from FIG. 1 and are only illustrated in FIGS. 2 and 4.

The electrocaloric film 12 can comprise any of a number of electrocaloric materials. In some embodiments, electrocaloric film thickness can be in a range having a lower limit of 0.1 µm, more specifically 0.5 µm, and even more specifically 1 µm. In some embodiments, the film thickness range can have an upper limit of 1000 µm, more specifically 100 µm, and even more specifically 10 µm. It is understood that these upper and lower range limits can be independently combined to disclose a number of different possible ranges. Examples of electrocaloric materials for the electrocaloric film can include but are not limited to inorganic materials (e.g., ceramics), electrocaloric polymers, and polymer/ceramic composites. Examples of inorganics include but are not limited to PbTiO₃ ("PT"), Pb(Mg_{1/3}Nb_{2/3})O₃ ("PMN"), PMN-PT, LiTaO₃, barium strontium titanate (BST) or PZT (lead, zirconium, titanium, oxygen). Examples of electrocaloric polymers include, but are not limited to ferroelectric polymers, liquid crystal polymers, and liquid crystal elastomers.

Ferroelectric polymers are crystalline polymers, or polymers with a high degree of crystallinity, where the crystalline alignment of polymer chains into lamellae and/or spherulite structures can be modified by application of an electric field. Such characteristics can be provided by polar structures integrated into the polymer backbone or appended to the polymer backbone with a fixed orientation to the backbone. Examples of ferroelectric polymers include polyvinylidene fluoride (PVDF), polytriethylene fluoride, odd-numbered nylon, copolymers containing repeat units derived from vinylidene fluoride, and copolymers containing repeat units derived from triethylene fluoride. Polyvinylidene fluoride and copolymers containing repeat units derived from vinylidene fluoride have been widely studied for their ferroelectric and electrocaloric properties. Examples of vinylidene fluoride-containing copolymers include copolymers with methyl methacrylate, and copolymers with one or more halogenated co-monomers including but not limited to trifluoroethylene, tetrafluoroethylene, chlorotrifluoroethylene, trichloroethylene, vinylidene chloride, vinyl chloride, and other halogenated unsaturated monomers.

Liquid crystal polymers, or polymer liquid crystals comprise polymer molecules that include mesogenic groups. Mesogenic molecular structures are well-known, and are often described as rod-like or disk-like molecular structures having electron density orientations that produce a dipole moment in response to an external field such as an external electric field. Liquid crystal polymers typically comprise numerous mesogenic groups connected by non-mesogenic molecular structures. The non-mesogenic connecting structures and their connection, placement and spacing in the polymer molecule along with mesogenic structures are important in providing the fluid deformable response to the external field. Typically, the connecting structures provide stiffness low enough so that molecular realignment is induced by application of the external field, and high enough to provide the characteristics of a polymer when the external field is not applied.

In some exemplary embodiments, a liquid crystal polymer can have rod-like mesogenic structures in the polymer backbone separated by non-mesogenic spacer groups having flexibility to allow for re-ordering of the mesogenic groups in response to an external field. Such polymers are also known as main-chain liquid crystal polymers. In some exemplary embodiments, a liquid crystal polymer can have rod-like mesogenic structures attached as side groups attached to the polymer backbone. Such polymers are also known as side-chain liquid crystal polymers.

With continued reference to FIG. 1, first electrode 14 is electrically connected to a first electrical bus element 18. Similarly, second electrode 16 is electrically connected to second electrical bus element 20. The bus elements include a power connection (not shown) configured to an electric power source (not shown). The electrodes can be any type of conductive material, including but not limited to metallized layers of a conductive metal such as aluminum or copper, or other conductive materials such as carbon (e.g., carbon nanotubes, graphene, or other conductive carbon). Noble metals can also be used, but are not required. Other conductive materials such as a doped semiconductor, ceramic, or polymer, or conductive polymers can also be used.

One or more support elements 22 can optionally be included for support and retention of the electrocaloric element. However, separate support elements are not required, as support and retention can also be provided by the bus elements as shown in FIG. 2 described below. As shown in FIG. 1, the support element(s) 22 can be configured to provide header spaces 24 and 26 for transport of working fluids to and from the electrocaloric element along fluid flow path 25. Although not required in all design configurations, in some embodiments, the support elements can be made from an electrically non-conductive material. Spacer elements 28 can optionally be included to help maintain separation from adjacent electrocaloric elements for a fluid flow path for a working fluid (e.g., either a fluid to be heated or cooled directly such as air, or a heat transfer fluid such as a dielectric organic compound). Any configuration of spacer elements can be utilized, such as a set of discrete disk spacer elements or linear or non-linear axially extending spacer elements.

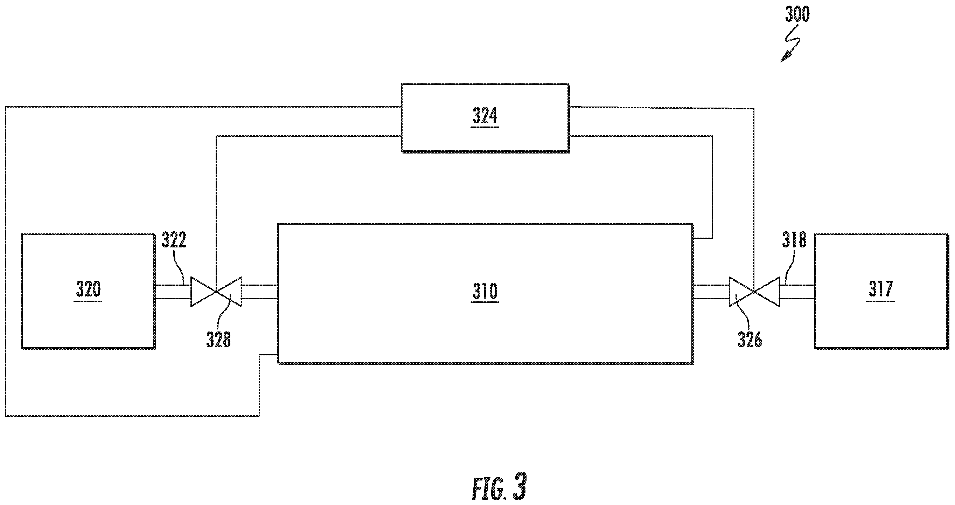

Turning now to FIG. 2 where like numbering is used as FIG. 1, the module 10 is shown as comprising a number of electrocaloric elements assembled together in a stack. As can be seen in FIG. 3, the spacers promote maintaining a physical separation between adjacent electrocaloric elements to provide a fluid flow path 25 between the spacers and the adjacent electrocaloric elements. Although not required in all design configurations, in design configurations where the spacer elements are disposed adjacent to electrodes of opposite polarity, the spacer elements can be made from an electrically non-conductive material. In some embodiments, adjacent electrical bus elements 18, 20 can have an interlocking configuration (with complementary contour of projections and recesses where a projection of one bus element projects is adjacent or projects into to a complementary recess of an adjacent bus element) as shown in FIG. 2. The electrical bus elements fit together to form bus bars that are connected through electrical connections (not shown) to an electrical power source (not shown). The bus bars can also serve as housing 17 if they are insulated on the outer surface.

An example embodiment of a heat transfer system and its operation are further described with respect to FIG. 3. As shown in FIG. 3, a heat transfer system 300 comprises an electrocaloric module 310 such as the module 10 of FIGS. 1 and 2 or another configuration. The electrocaloric element is in thermal communication with a heat sink 317 through a first thermal flow path 318, and in thermal communication with a heat source 320 through a second thermal flow path 322. The thermal flow paths are described below with respect thermal transfer through flow of a heat transfer fluid through control valves 326 and 328 between the electrocaloric element and the heat sink and heat source, but can also be through conductive heat transfer through solid state heat thermoelectric switches in thermally conductive contact with the electrocaloric element and the heat source or heat sink, or thermomechanical switches in movable to establish thermally conductive contact between the electrocaloric element and the heat source or heat sink. A controller 324 is configured to control electrical current to through a power source (not shown) to selectively activate the electrodes 314, 316. The controller 324 is also configured to open and close control valves 326 and 328 to selectively direct the heat transfer fluid along the first and second flow paths 318 and 322.

In operation, the module 310 can be operated by the controller 324 applying an electric field as a voltage differential across the electrocaloric element to cause a decrease in entropy and a release of heat energy by the electrocaloric elements. The controller 324 opens the control valve 326 to transfer at least a portion of the released heat energy along flow path 318 to heat sink 317. This transfer of heat can occur after the temperature of the electrocaloric elements has risen to a threshold temperature. In some embodiments, heat transfer to the heat sink 317 is begun as soon as the temperature of the electrocaloric elements increases to be about equal to the temperature of the heat sink 317. After application of the electric field for a time to induce a desired release and transfer of heat energy from the electrocaloric elements to the heat sink 317, the electric field can be removed. Removal of the electric field causes an increase in entropy and a decrease in heat energy of the electrocaloric elements. This decrease in heat energy manifests as a reduction in temperature of the electrocaloric elements to a temperature below that of the heat source 320. The controller 324 closes control valve 326 to terminate flow along flow path 318, and opens control device 328 to transfer heat energy from the heat source 320 to the colder electrocaloric elements in order to regenerate the electrocaloric elements for another cycle.

In some embodiments, for example where a heat transfer system is utilized to maintain a temperature in a conditioned space or thermal target, the electric field can be applied to the electrocaloric elements to increase its temperature until the temperature of the electrocaloric element reaches a first threshold. After the first temperature threshold, the controller 324 opens control valve 326 to transfer heat from the electrocaloric elements to the heat sink 317 until a second temperature threshold is reached. The electric field can continue to be applied during all or a portion of the time period between the first and second temperature thresholds, and is then removed to reduce the temperature of the electrocaloric elements until a third temperature threshold is reached. The controller 324 then closes control valve 326 to terminate heat flow transfer along heat flow path 318, and opens control valve 328 to transfer heat from the heat source 320 to the electrocaloric elements. The above steps can be optionally repeated until a target temperature of the conditioned space or thermal target (which can be either the heat source or the heat sink) is reached.

With reference now to FIG. 4, a side view of a side view of an electrocaloric element is schematically depicted. As shown in FIG. 4, first electrode 14 is electrically connected to a first electrical bus element 18. Similarly, second electrode 16 is electrically connected to second electrical bus element 20. The electrodes can be any type of conductive material, including but not limited to metallized layers of a conductive metal such as aluminum or copper, or other conductive materials such as carbon (e.g., carbon nanotubes, graphene, or other conductive carbon). Noble metals can also be used, but are not required. Other conductive materials such as a doped semiconductor, ceramic, or polymer, or conductive polymers can also be used. The electrodes 14 and 16 shown in FIG. 4 can extend from a position in contact with an electrical bus element on one edge of the film and extend across the film to a position that is not in contact with the electrical bus element of opposite polarity on the other edge of the film 12.

The electrocaloric module includes an embedded electronic component. In this context, the term "embedded" does not refer to components that are buried or partially buried in a material, although such buried components are not excluded either. Instead, as used herein, the term embedded describes a system configuration relationship between the electronic component and the electrocaloric module in which the embedded component is configured so as to not be directly involved in the generation or transmission of heat energy, but is instead configured to perform an ancillary or secondary function associated with generation or transfer of heat energy or other aspects of system operation. For example, the primary electrodes 14 and 16 are not considered to be embedded electronic components, nor would electrically-activated thermal switches for conductive heat transfer be considered as embedded components. However, many other types of electronic components can be embedded, including resistors, diodes, Zener diodes,, inductors, capacitors, a piezoelectric elements, current sensors, fusible links, or interdigitated electrodes. In some embodiments, additional electronic components may be embedded including resistance temperature detectors (RTD) and positive temperature coefficient of resistance elements (PTCR). With reference to FIG. 4, an electronic component 32 is shown embedded in the electrical connection between the bus element 18 and the electrode 14. In some embodiments, the electronic component 32 can be an electrical current protection or control device or a fusible link. In some embodiments, an additional electronic component may be embedded in the electrical connection between the bus element 18 and the electrode 14. The additional electronic component can be a positive temperature coefficient of resistance (PTCR) element. A PTCR element can control current and protect it from reaching potentially damaging levels with increased resistance as a function of increased temperature. As used herein the term "fusible link" means an electrical link that acts like a fuse to disconnect the module element from the power source thereby protecting the electrocaloric element. In some embodiments, the electronic component 32 can be a sensor or measurement device, in which case it can have a connection such as a wireless signal connection with a controller such as controller 324 (FIG. 3). Sensors or measurement devices that can be disposed in the electrical connection to the electrode(s) such as electronic component 32 can include electrical current sensors, a resistance temperature detector, a piezoelectric element, a sensor to measure electric dissipation, a sensor to measure current through the circuit and the circuit's quiescent electrical discharge, a noise sensor, an acoustic sensor, a voltage sensor, or an electrical arc sensor. In some embodiments, an electronic component can be embedded in the module in contact with the electrocaloric film 12, such as shown for electronic component 34. In some embodiments, the electronic component 34 can be a sensor to measure one or more properties of the electrocaloric material such as temperature, resistivity, capacitance, current, or voltage. The sensor 34 can be connected to an electrical power source through electrical connections (not shown) and can be connected to a controller such as controller 324 (FIG. 3) through the same electrical connections or wirelessly.

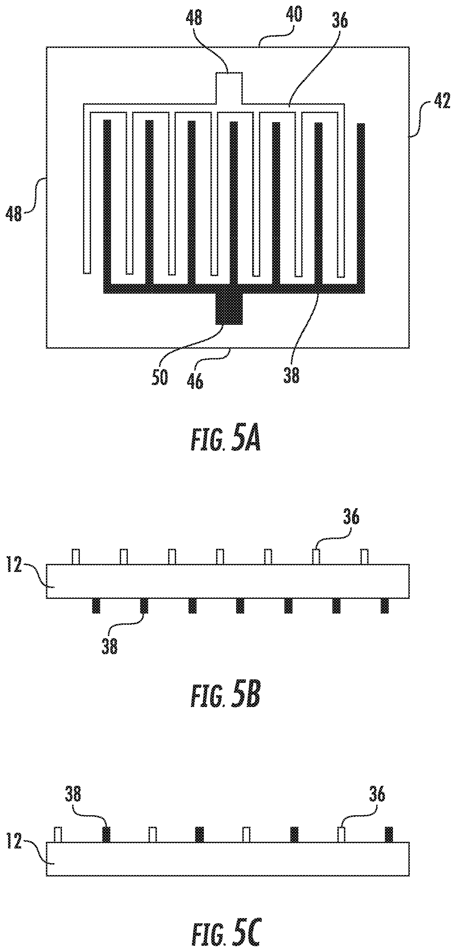

In some embodiments, an embedded electronic component such as electronic component 34 can comprise electrodes with electrocaloric material between the electrodes. In some embodiments, the electrodes can comprise interdigitated electrodes on the electrocaloric film surface or opposing surfaces. In some embodiments, the electrodes can comprise film or plate structures on opposing film surfaces to form a capacitor-like structure. Example embodiments of interdigitated electrodes are schematically shown in FIGS. 5A, 5B, and 5C. As shown in FIG. 5A, interdigitated electrodes 36 and 38 are shown in a top view on electrocaloric film 12. Electrical connectors 48 and 50 provide a connection to a power source and/or controller (not shown). The interdigitated electrodes 36 and 38 can be on the same side of the electrocaloric film 12 as shown in FIG. 5C, or on opposite sides of the electrocaloric film 12 as shown in FIG. 5B. In some embodiments, the spacing between the individual fingers of each electrode can range from 0.5 times the film thickness to 5 times the film thickness. In some embodiments, such electrode finger spacing can provide a technical effect of promoting distribution through the electric film of an electric field formed when the electrodes are powered.

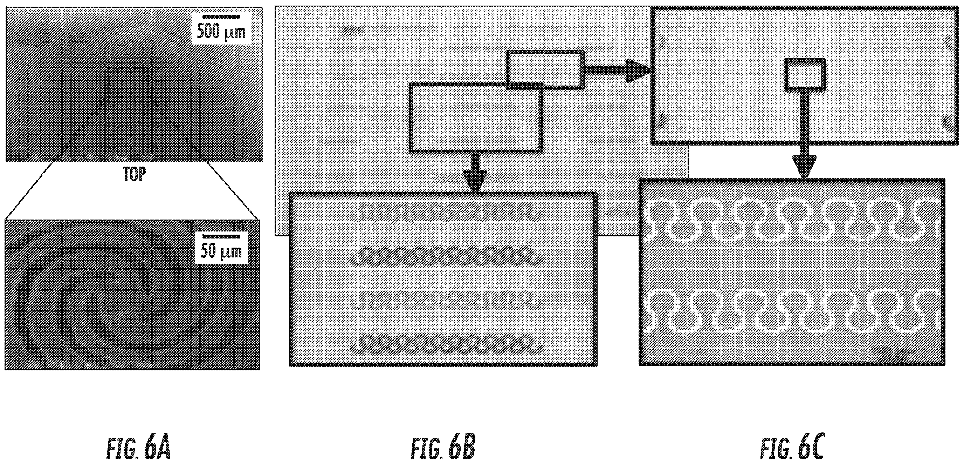

In operation, electrodes such as the interdigitated electrodes 36 and 38 can be used for various purposes such as measuring pyroelectric coefficient, bulk resistivity (FIG. 5C electrodes), surface resistivity/conductivity, (FIG. 5B electrodes) for detecting arcing conditions to which the primary electrodes 14 and 16 (FIG. 4) may be subjected or for detecting the presence of water at the film surface, electrocaloric material breakdown strength, electrocaloric material dielectric constant (e.g., to monitor for dielectric loss). An example embodiment of a circuit configuration for electrodes is schematically depicted in FIG. 6. As shown in FIG. 6, electrodes 36 and 38 are disposed on opposite sides of the electrocaloric film 12 in a capacitor-like structure. The electrodes 36 and 38 are shown as non-interdigitated structures, but interdigitated electrodes could be used. A detector is connected to the electrodes to receive and amplify an electrical signal. For example, the capacitor-like structure can produce a piezoelectric effect from dimensional changes to the electrocaloric film 12 (e.g., the film gets thinner when stretched) that can be used to detect fluid pressure variations in the electrocaloric module or electrostrictive dimensional variations that affect the electrocaloric film 12 during operation. Measurement of other properties (e.g., current, voltage, dissipation, resistance, temperature, strain, etc.) can be accomplished by generating an interrogation signal from an interrogation circuit, which includes an AC or DC power source to provide excitation to the electrodes and one or more circuit elements (e.g., resistor, capacitor, inductor), and then measuring the response at detector. The circuit element can also be located at the position designated by the lead line for number used for to label the interrogation circuit, as its position is flexible.

In some embodiments, an electronic component can be embedded in the electrocaloric module physically separated from the electrocaloric elements. An example embodiment is shown in FIG. 1 of an electronic component 56 connected by electrical connection 58 to a power source/controller (not shown). Electronic component 56 is disposed in the header space 26 of the electrocaloric module 10 and can include, for example, a fluid temperature sensor (e.g., an RTD) or a fluid pressure sensor. Also, many of the above-described electronic components are passive components that do not involve signal amplification. However, active components such as transistors, semiconductor circuit chips, microprocessors, etc., can also be embedded.

Electronic components can be embedded in an electrocaloric module by various manufacturing techniques, and can be done at any stage of the manufacturing process. For example, electronic components that are integrated with the electrical connections to electrodes 14 and 16 can be deposited as part of the electrode fabrication and attachment process. Electronic components that are attached to or integrated with the electrocaloric film can be glued, printed, deposited (e.g., vapor deposition), or glued directly onto the film. In some embodiments, the electronic component and conductive traces for the component's electrical connections can be fabricated onto a transfer film, which can then be contacted with the electrocaloric film to transfer the component and conductive traces onto the electrocaloric film. Electronic components that are separate from the electrocaloric elements can be fabricated and installed by various conventional fabrication techniques (e.g., hole boring, brazing, etc.).

While the present invention has been described in detail in connection with only a limited number of embodiments, it should be readily understood that the present invention is not limited to such disclosed embodiments. Rather, the present disclosure can be modified to incorporate any number of variations, alterations, substitutions or equivalent arrangements not heretofore described, but which are within the scope of the present invention, as defined by the appended claims. Additionally, while various embodiments of the present disclosure have been described, it is to be understood that aspects of the present invention may include only some of the described embodiments. Accordingly, the present invention is not to be seen as limited by the foregoing description, but is only limited by the scope of the appended claims.

## Claims

1. An electrocaloric module (10; 310), comprising
a housing (17);
an electrocaloric element in the housing, the electrocaloric element comprising an electrocaloric film (12), a first electrode (14) on a first surface of the electrocaloric film, and a second electrode (16) on a second surface of the electrocaloric film;
a first thermal connection (326) configured to connect to a first thermal flow path (318) between the electrocaloric element and a heat sink (317);
a second thermal connection (328) configured to connect to a second thermal flow path (322) between the electrocaloric element and a heat source (320); and
a power connection connected to the electrodes configured to connect to a power source;
**characterized by**
an embedded electronic component (32, 34, 56) configured to perform an ancillary or secondary function associated with generation or transfer of heat energy so as to not be directly involved in the generation or transmission of heat energy,
wherein the embedded electronic component is selected from a resistor, a diode, a Zener diode, an inductor, a capacitor, a piezoelectric element, a current sensor, a fusible link, or interdigitated electrodes.

2. A heat transfer system (300), comprising:
the electrocaloric module of claim 1,
a first thermal flow path (318) between the electrocaloric elements and a heat sink (317) through the first thermal connection (326),
a second thermal flow path (328) between the electrocaloric elements and a heat source (320) through the second thermal connection (322),
an electrical connection between a power source and the electrodes further through the power connection, and
a controller (324) configured to selectively apply voltage to activate the electrodes in coordination with heat transfer along the first and second thermal flow paths to transfer heat from the heat source to the heat sink.

3. The heat transfer system of claim 2, wherein the controller is configured to direct power to or receive a signal from the embedded electronic component.

4. A method of making an electrocaloric module (10; 310), comprising
fabricating an electrocaloric element comprising an electrocaloric film (12), a first electrode (14) on a first surface of the electrocaloric film (12), and a second electrode (16) on a second surface of the electrocaloric film; and
disposing the electrocaloric element in a housing (17), and providing a first thermal connection (326) configured to connect to a first thermal flow path (318) between the electrocaloric element and a heat sink (317), a second thermal connection (328) configured to connect to a second thermal flow path (322) between the electrocaloric element and a heat source (320), and a power connection connected to the electrodes configured to connect to a power source;
**characterized by**
embedding an electronic component (32; 34; 56) configured to perform an ancillary or secondary function associated with generation or transfer of heat energy so as to not be directly involved in the generation or transmission of heat energy in the electrocaloric module,
wherein the embedded electronic component is selected from a resistor, a diode, a Zener diode, an inductor, a capacitor, a piezoelectric element, a current sensor, a fusible link, or interdigitated electrodes.

5. A method of making a heat transfer system (300), comprising:
making an electrocaloric module according to the method of claim 4,
connecting the first thermal connection to a heat sink (317),
connecting the second thermal connection to a heat source (320),
connecting the electrical connection to a power source, and
connecting a controller (324) to the electrodes and the thermal connections, said controller being configured to selectively apply voltage to activate the electrodes in coordination with heat transfer along the first and second thermal flow paths to transfer heat from the heat source to the heat sink.

6. The electrocaloric module or heat transfer system or method of any of claims 1-5, wherein the electrocaloric module comprises a plurality of electrocaloric elements that individually comprise an electrocaloric film (12), a first electrode (14) on a first surface of the electrocaloric film, and a second electrode (16) on a second surface of the electrocaloric film.

7. A method of transferring heat, comprising
selectively applying voltage to activate electrodes (14, 16) on first and second surfaces of an electrocaloric material (12) disposed in an electrocaloric module (10; 310);
in coordination with application of voltage to the electrodes, transferring heat from a heat source (320) to the electrocaloric material and from the electrocaloric material to a heat sink (317); and
supplying electric power to, or receiving a signal from, or supplying electric power to and receiving a signal from an embedded electronic component (32; 34) embedded in the electrocaloric module,
**characterized in that**
the embedded electronic component is configured to perform an ancillary or secondary function associated with generation or transfer of heat energy so as to not be directly involved in the generation or transmission of heat energy, and
wherein the embedded electronic component is selected from a resistor, a diode, a Zener diode, an inductor, a capacitor, a piezoelectric element, a current sensor, a fusible link, or interdigitated electrodes.

8. The electrocaloric module or heat transfer system or method of any of claims 1-7, wherein the embedded electronic component comprises a passive electronic component.

9. The electrocaloric module or heat transfer system or method of any preceding claim, wherein the embedded electronic component comprises a positive temperature coefficient of resistance element or a fusible link in the connection between the electrical power source and the electrodes.

10. The electrocaloric module or heat transfer system or method of any preceding claim, wherein the embedded electronic component comprises a resistance temperature detector.

11. The electrocaloric module or heat transfer system or method of any preceding claim, wherein the embedded electronic component comprises interdigitated electrodes.

12. The electrocaloric module or heat transfer system or method of any of claims 1-11, wherein the embedded electronic component is integrated with or affixed to the electrocaloric element.

13. The electrocaloric module or heat transfer system or method of any of claims 1-11, wherein the embedded electronic component is separate from electrocaloric elements.

## Patentansprüche

1. Elektrokalorisches Modul (10; 310), umfassend
ein Gehäuse (17);
ein elektrokalorisches Element in dem Gehäuse, wobei das elektrokalorische Element einen elektrokalorischen Film (12), eine erste Elektrode (14) auf einer ersten Fläche des elektrokalorischen Films und eine zweite Elektrode (16) auf einer zweiten Fläche des elektrokalorischen Films umfasst; eine erste thermische Verbindung (326), die zum Verbinden mit einem ersten thermischen Strömungspfad (318) zwischen dem elektrokalorischen Element und einer Wärmesenke (317) konfiguriert ist;
eine zweite thermische Verbindung (328), die zum Verbinden mit einem zweiten thermischen Strömungspfad (322) zwischen dem elektrokalorischen Element und einer Wärmequelle (320) konfiguriert ist; und
eine Stromverbindung, die mit den Elektroden verbunden und zum Verbinden mit einer Stromquelle konfiguriert ist; **gekennzeichnet durch**
ein eingebundenes elektronisches Bauteil (32, 34, 56), das zum Durchführen einer der Erzeugung oder Übertragung von Wärmeenergie zugeordneten Neben- oder Sekundärfunktion konfiguriert ist, sodass es nicht direkt an der Erzeugung oder Übertragung von Wärmeenergie beteiligt ist,
wobei das eingebundene elektronische Bauteil ausgewählt ist aus einem Widerstand, einer Diode, einer Zenerdiode, einem induktiven Bauteil, einem Kondensator, einem piezoelektrischen Element, einem Stromsensor, einer Schmelzsicherung oder Interdigitalelektroden.

2. Wärmeübertragungssystem (300), umfassend:
das elektrokalorische Modul nach Anspruch 1,
einen ersten thermischen Strömungspfad (318) zwischen den elektrokalorischen Elementen und einer Wärmesenke (317) durch die erste thermische Verbindung (326),
einen zweiten thermischen Strömungspfad (328) zwischen den elektrokalorischen Elementen und einer Wärmequelle (320) durch die zweite thermische Verbindung (322),
eine elektrische Verbindung zwischen einer Stromquelle und den Elektroden weiter durch die Stromverbindung und
eine Steuerung (324), die zum selektiven Anlegen von Spannung zum Aktivieren der Elektroden in Koordination mit Wärmeübertragung entlang des ersten und zweiten thermischen Strompfades konfiguriert ist, um Wärme von der Wärmequelle an die Wärmesenke zu übertragen.

3. Wärmeübertragungssystem nach Anspruch 2, wobei die Steuerung zum Leiten von Strom zu dem eingebundenen elektronischen Bauteil oder zum Empfangen eines Signals davon konfiguriert ist.

4. Verfahren zur Herstellung eines elektrokalorischen Moduls (10; 310), umfassend
Fertigen eines elektrokalorischen Elements, umfassend einen elektrokalorischen Film (12), eine erste Elektrode (14) auf einer ersten Fläche des elektrokalorischen Films (12) und eine zweite Elektrode (16) auf einer zweiten Fläche des elektrokalorischen Films; und
Anordnen des elektrokalorischen Elements in einem Gehäuse (17) und Bereitstellen einer ersten thermischen Verbindung (326), die zum Verbinden mit einem ersten thermischen Strömungspfad (318) zwischen dem elektrokalorischen Element und einer Wärmesenke (317) konfiguriert ist, einer zweiten thermischen Verbindung (328), die zum Verbinden mit einem zweiten thermischen Strömungspfad (322) zwischen dem elektrokalorischen Element und einer Wärmequelle (320) konfiguriert ist, und einer Stromverbindung, die mit den Elektroden verbunden und zum Verbinden mit einer Stromquelle konfiguriert ist;
**gekennzeichnet durch**
Einbinden eines elektronischen Bauteils (32; 34; 56), das zum Durchführen einer der Erzeugung oder Übertragung von Wärmeenergie zugeordneten Neben- oder Sekundärfunktion konfiguriert ist, sodass es nicht direkt an der Erzeugung oder Übertragung von Wärmeenergie beteiligt ist, in das elektrokalorische Modul,
wobei das eingebundene elektronische Bauteil ausgewählt ist aus einem Widerstand, einer Diode, einer Zenerdiode, einem induktiven Bauteil, einem Kondensator, einem piezoelektrischen Element, einem Stromsensor, einer Schmelzsicherung oder Interdigitalelektroden.

5. Verfahren zur Herstellung eines Wärmeübertragungssystems (300), umfassend:
Herstellen eines elektrokalorischen Moduls nach dem Verfahren nach Anspruch 4,
Verbinden der ersten thermischen Verbindung mit einer Wärmesenke (317),
Verbinden der zweiten thermischen Verbindung mit einer Wärmequelle (320),
Verbinden der elektrischen Verbindung mit einer Stromquelle und Verbinden einer Steuerung (324) mit den Elektroden und den thermischen Verbindungen, wobei die Steuerung zum selektiven Anlegen von Spannung zum Aktivieren der Elektroden in Koordination mit Wärmeübertragung entlang des ersten und zweiten thermischen Strompfades konfiguriert ist, um Wärme von der Wärmequelle an die Wärmesenke zu übertragen.

6. Elektrokalorisches Modul oder Wärmeübertragungssystem oder Verfahren nach einem der Ansprüche 1-5, wobei das elektrokalorische Modul eine Vielzahl von elektrokalorischen Elementen umfasst, die einzeln einen elektrokalorischen Film (12), eine erste Elektrode (14) auf einer ersten Fläche des elektrokalorischen Films und eine zweite Elektrode (16) auf einer zweiten Fläche des elektrokalorischen Films umfassen.

7. Verfahren zur Wärmeübertragung, umfassend
selektives Anlegen von Spannung zum Aktivieren von Elektroden (14, 16) an einer ersten und zweiten Fläche eines in einem elektrokalorischen Modul (10; 310) angeordneten elektrokalorischen Materials (12);
Übertragen von Wärme von einer Wärmequelle (320) auf das elektrokalorische Material und von dem elektrokalorischen Material auf eine Wärmesenke (317) in Koordination mit dem Anlegen von Spannung an die Elektroden; und
Einspeisen von elektrischem Strom in ein oder Empfangen eines Signals von oder Einspeisen von elektrischem Strom in ein und Empfangen eines Signals von einem eingebundenen elektronischen Bauteil (32; 34), das in das elektrokalorische Modul eingebunden ist,
**dadurch gekennzeichnet, dass**
das eingebundene elektronische Bauteil zum Durchführen einer der Erzeugung oder Übertragung von Wärmeenergie zugeordneten Neben-oder Sekundärfunktion konfiguriert ist, sodass es nicht direkt an der Erzeugung oder Übertragung von Wärmeenergie beteiligt ist, und
wobei das eingebundene elektronische Bauteil ausgewählt ist aus einem Widerstand, einer Diode, einer Zenerdiode, einem induktiven Bauteil, einem Kondensator, einem piezoelektrischen Element, einem Stromsensor, einer Schmelzsicherung oder Interdigitalelektroden.

8. Elektrokalorisches Modul oder Wärmeübertragungssystem oder Verfahren nach einem der Ansprüche 1-7, wobei das eingebundene elektronische Bauteil ein passives elektronisches Bauteil umfasst.

9. Elektrokalorisches Modul oder Wärmeübertragungssystem oder Verfahren nach einem der vorhergehenden Ansprüche, wobei das eingebundene elektronische Bauteil ein Element mit positivem Temperaturkoeffizienten des Widerstandswerts oder eine Schmelzsicherung in der Verbindung zwischen der elektrischen Stromquelle und den Elektroden umfasst.

10. Elektrokalorisches Modul oder Wärmeübertragungssystem oder Verfahren nach einem der vorhergehenden Ansprüche, wobei das eingebundene elektronische Bauteil einen Widerstandstemperaturdetektor umfasst.

11. Elektrokalorisches Modul oder Wärmeübertragungssystem oder Verfahren nach einem der vorhergehenden Ansprüche, wobei das eingebundene elektronische Bauteil Interdigitalelektroden umfasst.

12. Elektrokalorisches Modul oder Wärmeübertragungssystem oder Verfahren nach einem der Ansprüche 1-11, wobei das eingebundene elektronische Bauteil mit dem elektrokalorischen Element integriert oder daran befestigt ist.

13. Elektrokalorisches Modul oder Wärmeübertragungssystem oder Verfahren nach einem der Ansprüche 1-11, wobei das eingebundene elektronische Bauteil von elektrokalorischen Elementen getrennt ist.

## Revendications

1. Module électrocalorique (10 ; 310), comprenant
un boîtier (17) ;
un élément électrocalorique dans le boîtier, l'élément électrocalorique comprenant un film électrocalorique (12), une première électrode (14) sur une première surface du film électrocalorique, et une seconde électrode (16) sur une seconde surface du film électrocalorique ;
une première connexion thermique (326) configurée pour se connecter à un premier chemin d'écoulement thermique (318) entre l'élément électrocalorique et un dissipateur thermique (317) ; une seconde connexion thermique (328) configurée pour se connecter à un second chemin d'écoulement thermique (322) entre l'élément électrocalorique et une source de chaleur (320) ; et une connexion de puissance connectée aux électrodes configurées pour se connecter à une source de puissance ;
**caractérisé par**
un composant électronique intégré (32, 34, 56) configuré pour exécuter une fonction auxiliaire ou secondaire associée à la génération ou au transfert d'énergie thermique de manière à ne pas être directement impliqué dans la génération ou la transmission d'énergie thermique,
dans lequel le composant électronique intégré est choisi parmi une résistance, une diode, une diode Zener, une inductance, un condensateur, un élément piézoélectrique, un capteur de courant, une liaison fusible ou des électrodes interdigitées.

2. Système de transfert de chaleur (300), comprenant :
le module électrocalorique selon la revendication 1,
un premier chemin d'écoulement thermique (318) entre les éléments électrocaloriques et un dissipateur thermique (317) à travers la première connexion thermique (326),
un second chemin d'écoulement thermique (328) entre les éléments électrocaloriques et une source de chaleur (320) à travers la seconde connexion thermique (322),
une connexion électrique entre une source de puissance et les électrodes davantage à travers la connexion de puissance, et
un dispositif de commande (324) est configuré pour appliquer sélectivement une tension afin d'activer les électrodes en coordination avec un transfert de chaleur le long des premier et second chemins d'écoulement thermique afin de transférer la chaleur de la source de chaleur au dissipateur thermique.

3. Système de transfert de chaleur selon la revendication 2, dans lequel le dispositif de commande est configuré pour diriger ou recevoir un signal du composant électronique intégré.

4. Méthode de fabrication d'un module électrocalorique (10 ; 310), comprenant
la fabrication d'un élément électrocalorique comprenant un film électrocalorique (12), une première électrode (14) sur une première surface du film électrocalorique (12), et une seconde électrode (16) sur une seconde surface du film électrocalorique ; et
la disposition de l'élément électrocalorique dans un boîtier (17), et la fourniture d'une première connexion thermique (326) configurée pour se connecter à un premier chemin d'écoulement thermique (318) entre l'élément électrocalorique et un dissipateur thermique (317), une seconde connexion thermique (328) configurée pour se connecter à un second chemin d'écoulement thermique (322) entre l'élément électrocalorique et une source de chaleur (320), et une connexion de puissance connectée aux électrodes configurées pour se connecter à une source de puissance ;
**caractérisée par**
l'intégration d'un composant électronique (32 ; 34 ; 56) configuré pour exécuter une fonction auxiliaire ou secondaire associée à la génération ou au transfert d'énergie thermique de manière à ne pas être directement impliqué dans la génération ou la transmission d'énergie thermique dans le module électrocalorique,
dans laquelle le composant électronique intégré est choisi parmi une résistance, une diode, une diode Zener, une inductance, un condensateur, un élément piézoélectrique, un capteur de courant, une liaison fusible ou des électrodes interdigitées.

5. Méthode de fabrication d'un système de transfert de chaleur (300), comprenant :
la fabrication d'un module électrocalorique selon la méthode de la revendication 4,
la connexion de première connexion thermique à un dissipateur thermique (317),
la connexion de la seconde connexion thermique à une source de chaleur (320),
la connexion de la connexion électrique à une source de puissance, et
la connexion d'un dispositif de commande (324) aux électrodes et aux connexions thermiques, ledit dispositif de commande étant est configuré pour appliquer sélectivement une tension afin d'activer les électrodes en coordination avec un transfert de chaleur le long des premier et second chemins d'écoulement thermique afin de transférer la chaleur de la source de chaleur au dissipateur thermique.

6. Module électrocalorique ou système ou méthode de transfert de chaleur selon l'une quelconque des revendications 1 à 5, dans lesquels le module électrocalorique comprend une pluralité d'éléments électrocaloriques qui comprennent individuellement un film électrocalorique (12), une première électrode (14) sur une première surface du film électrocalorique, et une seconde électrode (16) sur une seconde surface du film électrocalorique.

7. Méthode de transfert de chaleur, comprenant
l'application sélective d'une tension pour activer des électrodes (14, 16) sur des première et seconde surfaces d'un matériau électrocalorique (12) disposé dans un module électrocalorique (10 ; 310) ;
en coordination avec l'application d'une tension aux électrodes, le transfert de la chaleur d'une source de chaleur (320) au matériau électrocalorique et du matériau électrocalorique à un dissipateur thermique (317) ; et
la fourniture de puissance électrique à, ou la réception d'un signal d'un, ou la fourniture de puissance électrique à et la réception d'un signal d'un composant électronique (32 ; 34) intégré dans le module électrocalorique,
**caractérisée en ce que**
le composant électronique intégré est configuré pour exécuter une fonction auxiliaire ou secondaire associée à la génération ou au transfert d'énergie thermique de manière à ne pas être directement impliqué dans la génération ou la transmission d'énergie thermique, et
dans laquelle le composant électronique intégré est choisi parmi une résistance, une diode, une diode Zener, une inductance, un condensateur, un élément piézoélectrique, un capteur de courant, une liaison fusible ou des électrodes interdigitées.

8. Module électrocalorique ou système ou méthode de transfert de chaleur selon l'une quelconque des revendications 1 à 7, dans lesquels le composant électronique intégré comprend un composant électronique passif.

9. Module électrocalorique ou système ou méthode de transfert de chaleur selon une quelconque revendication précédente, dans lesquels le composant électronique intégré comprend un coefficient de température positif d'élément de résistance ou une liaison fusible dans la connexion entre la source de puissance électrique et les électrodes.

10. Module électrocalorique ou système ou méthode de transfert de chaleur selon une quelconque revendication précédente, dans lesquels le composant électronique intégré comprend un détecteur de température de résistance.

11. Module électrocalorique ou système ou méthode de transfert de chaleur selon une quelconque revendication précédente, dans lesquels le composant électronique intégré comprend des électrodes interdigitées.

12. Module électrocalorique ou système ou méthode de transfert de chaleur selon l'une quelconque des revendications 1 à 11, dans lesquels le composant électronique intégré est intégré ou fixé à l'élément électrocalorique.

13. Module électrocalorique ou système ou méthode de transfert de chaleur selon l'une quelconque des revendications 1 à 11, dans lesquels le composant électronique intégré est séparé des éléments électrocaloriques.
